# EUROPÄISCHE PATENTSCHRIFT

(11) **EP 1 466 937 B1**
(45) Veröffentlichungstag und Bekanntmachung des Hinweises auf die Patenterteilung: **30.01.2008**
(21) Anmeldenummer: 04007189.6
(22) Anmeldetag: 25.03.2004
(51) Int. Cl.: C08J 3/12, C04B 24/24, C04B 24/26, C04B 26/00, C04B 26/06

(54) **Polyvinylalkohol-stabilisierte Redispersionspulver mit verflüssigenden Eigenschaften**
Polyvinylalcohol stabilised redispersing powder with fluidising properties
Poudre redispersable stabilisé par le polyvinylalcohol et characterisé par des propriétés fluidifiantes

(30) Priorität: 08.04.2003 DE 10316079
(43) Veröffentlichungstag der Anmeldung: 13.10.2004
(73) Patentinhaber: Wacker Polymer Systems GmbH & Co. KG, 84489 Burghausen (DE)
(72) Erfinder: Härzschel, Reinhard, Dr., 84489 Burghausen (DE); Bastelberger, Thomas, Dr., 84547 Emmerting (DE); Dietrich, Ulf, Dr., 67063 Ludwigshafen (DE); Hoffmann, Armin, 84524 Neuötting (DE)
(74) Vertreter: Schuderer, Michael

(56) Entgegenhaltungen:
- WO-A-03/031365
- US-A- 6 133 345

## Beschreibung

Die Erfindung betrifft Polyvinylalkohol-stabilisierte Redispersionspulver mit verflüssigenden Eigenschaften, Verfahren zu deren Herstellung sowie deren Verwendung in bauchemischen Produkten.

Mit Schutzkolloid stabilisierte, in Wasser redispergierbare Polymerpulver (Redispersionspulver) werden als Additive in Baustoffmassen, beispielsweise auf der Basis von Zement oder Gips zur Verbesserung der Festigkeit, der Abriebsbeständigkeit oder der Haftzugsfestigkeit bei Bauklebern eingesetzt. Als Schutzkolloid wird häufig Polyvinylalkohol eingesetzt, da dieser im Vergleich zu mit niedermolekularen Emulgatoren stabilisierten Polymerisaten selbst zur Verbesserung der Festigkeit beitragt.

Solche Redispersionspulver werden mittels Trocknung der entsprechenden mit Schutzkolloid stabilisierten Polymerdispersionen zugänglich, wobei während der Trocknung sogenannte Trocknungshilfsmittel (Verdusungshilfen) zugegeben werden, um die Bildung von Agglomeraten zu verhindern. In der EP-A 467103 werden wasserlösliche Copolymerisate mit carboxylfunktionellen Comonomereinheiten als Trocknungshilfsmittel eingesetzt. Die DE-A 19707746 beschreibt die Verwendung von Copolymerisaten aus ethylenisch ungesättigten Carbonsäuren und deren Hydroxyalkylester als Trocknungshilfsmittel. Aus der EP-A 629650 sind Copolymerisate mit Acrylamidomethylpropansulfonsäure-Einheiten als Verdüsungshilfe bekannt. Die EP-A 671435 empfiehlt die Sprühtrocknung in Gegenwart von Mischpolymerisaten mit hydrophilen, wasserlöslichen und salzbildenden Monomeren.

In vielen Fällen wird bei Modifizierung der Baustoffmassen, beispielsweise Mörtel oder Beton, mit den Redispersionspulvern deren Fließfähigkeit eingeschränkt. Bei Fließmörteln wie selbstverlaufenden Spachtelmassen oder Estrichen ist aber eine flüssige Konsistenz, welche sich während der Verarbeitung nur wenig ändert, essentiell. In diesen Anwendungen werden deshalb sogenannte Zementverflüssiger als Additive eingesetzt. So beschreibt die EP-A 549280 Verflüssiger auf der Basis von Pfropfcopolymeren mit vier verschiedenen Comonomereinheiten: (Meth)acrylsäureeinheiten, Hydroxyalkyl(meth)acrylateinheiten, (Meth)acrylamid-2-methyl-propansulfonsäure, EO-Gruppenhaltiges (Meth)acrylat. Die JP-A 59/162161 beschreibt in Wasser-lösliche Copolymerisate, die Hydroxyalkylester einer ethylenisch ungesättigten Monocarbonsäure und ethylenisch ungesättigte Mono- oder Dicarbonsäure-Einheiten enthalten. Aus der EP-A 407889 sind Redispersionspulver bekannt, welche zur Verbesserung der Fließfähigkeit beim Einsatz in hydraulischen Bindemitteln Phenolsulfonsäure-Formaldehyd-Kondensationsprodukte enthalten. Die EP-A 812872 beschreibt Verfahren zur Herstellung von Polymerisatpulver bei denen als Trocknungshilfsmittel solche zugesetzt werden, welche verflüssigend wirken.

Der Erfindung lag die Aufgabe zugrunde, mit Polyvinylalkohol stabilisierte Redispersionspulver zur Verfügung zu stellen, welche die Fließfähigkeit von Baustoffmassen verbessern.

Gegenstand der Erfindung sind Polyvinylalkohol-stabilisierte Redispersionspulver mit verflüssigenden Eigenschaften erhältlich mittels Trocknung von mit Polyvinylalkoholen stabilisierten, wässrigen Dispersionen von Homo- oder Mischpolymerisaten aus einem oder mehreren Monomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, in Gegenwart eines Copolymerisats **auf Basis von**
a) **10 bis 50 Gew.-% ein oder mehrere Monomere** aus der Gruppe umfassend ethylenisch ungesättigte Monocarbonsäuren, ethylenisch ungesättigte Dicarbonsäuren und deren Anhydride, mit jeweils 4 bis 8 C-Atome, sowie deren Salze,
b) **10 bis 50 Gew.-% ein oder mehrere ethylenisch ungesättigte** Verbindungen mit Sulfonsäure-, Schwefelsäure- und Phosphonsäure-Gruppen sowie deren Salzen,
c) **20 bis 80 Gew.-% ein oder mehrere Monomere** aus der Gruppe umfassend Vinylester von unverzweigten oder verzweigten Alkylcarbonsäuren mit 1 bis 18 C-Atomen und Acrylsäureester sowie Methacrylsäureester von verzweigten oder unverzweigten Alkoholen mit 1 bis 15 C-Atomen, **jeweils bezogen auf das Gesamtgewicht des Copolymerisats.**
Für das Basispolymerisat geeignete Vinylester sind solche von Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und - nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri-(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Beispiele für geeignete Homo- und Mischpolymerisate sind Vinylacetat-Homopölymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester und/oder Methacrylsäureester, Mischpolymerisate von Vinylacetat mit Ethylen und Vinylchlorid, Styrol-Acrylsäureester-Copolymerisate, Styrol-1,3-Butadien-Copolymerisate, wobei die Polymerisate noch die genannten Hilfsmonomere enthalten können.

Bevorzugt werden Vinylacetat-Homopolymerisate;
Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11;
Mischpolymerisate von Vinylacetat, 1 bis 40 Gew.-% Ethylen und vorzugsweise 1 bis 60 Gew.-% Acrylsäureester und/oder Methacrylsäureester von unverzweigten oder verzweigten Alkoholen mit 1 bis 15 C-Atomen, insbesonders n-Butylacrylat und/oder 2-Ethylhexylacrylat und/oder Methylmethacrylat; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit Vinylacetat, 1 bis 40 Gew.-% Ethylen und 1 bis 60 Gew.-% Vinylchlorid; wobei
die Polymerisate noch die genannten Hilfsmonomere in den genannten Mengen enthalten können, und sich die Angaben in Gew.-% auf jeweils 100 Gew.-% aufaddieren.

Bevorzugt werden auch Mischpolymerisate von n-Butylacrylat oder 2-Ethylhexylacrylat oder Copolymerisate von Methylmethacrylat mit n-Butylacrylat und/oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Geeignete Polyvinylalkohole sind teilverseifte oder vollverseifte Polyvinylalkohole. Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung, von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung, von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20°C, DIN 53015. Die genannten Polyvinylalkohole sind mittels dem Fachmann bekannter Verfahren zugänglich und werden im allgemeinen in einer Menge von insgesamt 1 bis 20 Gew.-%, bezogen auf das Gesamtgewicht der Monomere, bei der Polymerisation zugesetzt.

Die Herstellung der mit Polyvinylalkohol stabilisierten Polymerdispersionen kann mittels dem Fachmann bekannter Verfahren, beispielsweise den in der DE-A 10253046 beschriebenen, vorzugsweise mittels radikalisch initiierter Emulsionspolymerisation, erfolgen.

Das verflüssigend wirkende Copolymerisat enthält bevorzugt als Comonomer a) ein oder mehrere Monomere aus der Gruppe umfassend Acrylsäure, Methacrylsäure, Crotonsäure, Itaconsäure, Fumarsäure, Maleinsäure, sowie die Salze der genannten Carbonsäuren.

Bevorzugte Monomere b) sind Vinylsulfonsäure und deren Alkali- und Erdalkalimetallsalze, Styrolsulfonsäure und deren Alkali- und Erdalkalimetallsalze, Methallylsulfonsäure und deren Alkali- und Erdalkalimetallsalze, p-Methallyloxyphenylsulfonsäure und deren Alkali- und Erdalkalimetallsalze, und Sulfonsäuren der allgemeinen Formel CH₂=CR¹-CO-X-CR²R³-R⁴-SO₃H sowie deren Alkali- und Erdalkalimetallsalze, wobei X = O oder NH, und R¹, R², R³ gleich oder verschieden sind und die Bedeutung H und C₁-bis C₃-Alkyl haben, und R⁴ C₁- bis C₄-Alkylen ist. Besonders bevorzugt werden Vinylsulfonsäure, Sulfopropyl(meth)acrylat, 2-Acrylamido-2-methylpropansulfonsäure und Methallylsulfonsäure sowie jeweils deren Alkali- und Erdalkalimetallsalze.

Bevorzugte Comonomere c) sind aus der Gruppe der Vinylester Vinylacetat, Vinylpropionat. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat.

Der Anteil der Comonomereinheiten a) beträgt 10 bis 50 Gew.-%, bevorzugt 10 bis 30 Gew.-%, jeweils bezogen auf das Gesamtgewicht des Copolymerisats. Der Anteil der Comonomereinheiten b) beträgt 10 bis 50 Gew.-%, bevorzugt 10 bis 30 Gew.-%, jeweils bezogen auf das Gesamtgewicht des Copolymerisats. Der Anteil der der Comonomereinheiten c) beträgt 20 bis 80 Gew.-%, bevorzugt 30 bis 70 Gew.-%, jeweils bezogen auf das Gesamtgewicht des Copolymerisats. Das Copolymerisat besitzt ein zahlenmittleres Molekulargewicht Mn von unter 50000 Dalton, vorzugsweise von 5000 bis 20000 Dalton.

Der Anteil des verflüssigend wirkenden Copolymerisats im Redispersionspulver beträgt 0.1 bis 25 Gew.-%, vorzugsweise 2 bis 20 Gew.-%, bezogen auf die polymeren Bestandteile des Redispersionspulvers.

Zur Herstellung der Redispersionspulver werden die wässrigen, Polyvinylalkohol-stabilisierten Dispersionen zusammen mit dem verflüssigend, wirkenden Copolymerisat getrocknet, beispielsweise mittels Wirbelschichttrocknung, Gefriertrocknung oder Sprühtrocknung. Vorzugsweise werden die Dispersionen sprühgetrocknet, besonders bevorzugt nach Zusatz von weiterem Polyvinylalkohol als Verdüsungshilfe,. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird Polyvinylalkohol als Verdüsungshilfe in einer solchen Menge eingesetzt, dass die Gesamtmenge an Polyvinylalkohol vor dem Trocknungsvorgang 3 bis 25 Gew.-%, bezogen auf den Polymeranteil beträgt; bevorzugt werden 5 bis 20 Gew.-%, bezogen auf den Polymeranteil eingesetzt. Als Verdüsungshilfe geeignet und bevorzugt sind die vorher als Schutzkolloide als geeignet und bevorzugt aufgeführten Polyvinylalkohole.

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm. Die Viskosität der zu verdüsenden Speise wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die damit erhältlichen, in Wasser redispergierbaren Polymerpulver-Zusammensetzungen können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), oder Gips, Kalk und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Besonders bevorzugt in selbstverlaufenden Bodenspachtelmassen und Fließestrichen.

Typische Rezepturen von selbstverlaufenden, hydraulisch abbindenden Massen enthalten
100 bis 500 Gew.-Teile Zement wie Portlandzement und/oder Tonerdezement,
300 bis 800 Gew.-Teile Füllstoffe wie Sand und/oder Kalksteinmehl und/oder Silicastäube und/oder Flugaschen,
0 bis 200 Gew.-Teile Anhydrit, Halbhydrat und/oder Gips,
0 bis 50 Gew.-Teile Calciumhydroxid,
0 bis 5 Gew.-Teile Entschäumer,
0.5 bis 10 Gew.-Teile Dispergiermittel,
1 bis 100 Gew.-Teile Redispersionspulver,
0.5 bis 5 Gew.-Teile Verzögerer wie Weinsäure, Citronensäure oder Saccharide,
0.5 bis 5 Gew.-Teile Beschleuniger, beispielsweise Alkalicarbonate,
0.2 bis 3 Gew.-Teile Verdicker wie Celluloseether,
wobei sich die Anteile auf 1000 Gew.-Teile aufaddieren, und die Trockenmischung, je nach gewünschter Konsistenz mit der entsprechenden Menge Wasser angerührt wird.

Mit der erfindungsgemäßen Redispersionspulvern wird in der Anwendung für selbstverlaufende Spachtelmassen (SVM) der Einsatz von zusätzlichen Verflüssigern nicht mehr erforderlich. Überraschenderweise wurde zudem gefunden, dass bei gleichzeitiger Sprühtrocknung von Polyvinylalkohol-stabilisierter Dispersion und Verflüssiger eine deutliche Steigerung der Verflüssigerwirkung beobachtet wird. Darüberhinaus konnte festgestellt werden, dass Polyvinylalkohol-stabilisierte Pulver, welche nicht erfindungsgemäß modifiziert wurden, sondern mit den üblichen Verflüssigern, welche hohe Anteile an Ethylenoxid- bzw. Propylenoxid-Einheiten enthalten, sehr schlecht redispergierbare und nicht blockstabile Redispersionspulver ergeben, die für den Einsatz in bauchemischen Produkten nicht geeignet sind.

### Beispiele:

Die durch Sprühtrocknung hergestellten Redispersionspulver wurden in der in Tabelle 1 angegebenen Selbstverlaufsmassen-Formulierung untersucht. Die einzelnen Komponenten wurden trocken gemischt und anschließend mit 21 g Wasser pro 100 g Trockenmischung angerührt.

**Tabelle 1:**

| Menge [g] | Rohstoff | Hersteller / Lieferant. |
|---|---|---|
| 94.0 | Tonerdeschmelzzement Fondue | Lafarge Aluminates int. |
| 200.0 | Portlandzement CEM I 42.5 R | Milke-Zement GmbH & Co.KG |
| 47.0 | Anhydrit | Hilliges Gipswerke KG |
| 47.0 | Leichtspat | W. Priem & Co. |
| 359.0 | Quarzsand H 33 | Quarzwerke GmbH |
| 226.3 | Calciumcarbonat Omyacarb 20 BG | Omya GmbH |
| 23.0 | RD-Pulver / Verflüssiger | |
| 1.2 | Weinsäure | Merck Eurolab GmbH |
| 1.0 | Li₂CO₃ | Merck Eurolab GmbH |
| 1.0 | Entschäumer, Agitan P 800 | Münzing Chemie GmbH |
| 0.5 | Cellulose, Tylose H 300 P2 | Clariant GmbH |
| 1000.0 | | |

### Vergleichsbeispiel 1:

20 Gew.-Teile eines Redispersionspulvers auf Basis eines Vinylacetat/Ethylen-Copolymeren mit einer Tg von 17°C und mit 8 Gew.-% teilverseiftem Polyvinylalkohol wurden mit 3 Gew.-Teilen Melflux 1641 (pulverförmiger Verflüssiger der Degussa) vorher abgemischt, und in der obigen Rezeptur getestet. Die Ergebnisse sind in Tabelle 2 zusammengefaßt.

### Vergleichsbeispiel 2:

23 Gew.-Teile eines Redispersionspulvers, hergestellt durch Verdüsung einer wässrigen Polymerdispersion auf Basis eines Vinylacetat/Ethylen-Copolymeren mit einer Tg von 17°C, mit 8 Gew.-% teilverseiftem Polyvinylalkohol, und mit 10 Gew.-% Melflux 1641, wurden in der obigen Rezeptur getestet. Die Ergebnisse sind in Tabelle 2 zusammengefaßt.

### Beispiel 3:

23 Gew.-Teile eines Redispersionspulvers, hergestellt durch Verdüsung einer wässrigen Polymerdispersion auf Basis eines mit 8 Gew.-% teilverseiftem Polyvinylalkohol stabilisierten Vinylacetat/Ethylen-Copolymeren mit einer Tg von 17°C, mit 5 Gew.-% teilverseiftem Polyvinylalkohol und mit 7.4, Gew.-% Verflüssiger A (Copolymer aus 22 Gew.-% Methacrylsäure, 49 Gew.-% Ethylacrylat, 7 Gew.-% Methylmethacrylat, 22 Gew.-% Sulfopropylacrylat), wurden in der obigen Rezeptur getestet. Die Ergebnisse sind in Tabelle 2 zusammengefaßt.

### Beispiel 4:

Analog Beispiel 3, nur dass anstelle von 7.4 Gew.-% Verflüssiger A 6.7 Gew.-% Verflüssiger. B (Copolymer aus 27 Gew.-% Methacrylsäure, 49 Gew.-% Ethylacrylat, 7 Gew.-% Methylmethacrylat, 17 Gew.-% Sulfopropylacrylat) coverdüst wurden. Die Ergebnisse sind in Tabelle 2 zusammengefaßt.

### Beispiel 5:

Analog Beispiel 3 nur dass anstelle von 7.4 Gew.-%Verflüssiger A 10 Gew.-% Verflüssiger A coverdüst wurden. Die Ergebnisse sind in Tabelle 2 zusammengefaßt.

### Vergleichsbeispiel 6:

20 Gew.-Teile eines Redispersionspulvers auf Basis eines Vinylacetat/Ethylen-Copolymeren mit einer Tg von 17°C und mit 8 Gew.-% teilverseiftem Polyvinylalkohol wurden vorher mit 3 Gew.-Teilen Verflüssiger A abgemischt, und in der obigen Rezeptur getestet. Die Ergebnisse sind in Tabelle 2 zusammengefaßt.

### Vergleichsbeispiel 7:

20 Gew.-Teile eines Redispersionspulvers auf Basis eines Vinylacetat/Ethylen-Copolymeren mit einer Tg von 17°C und mit 8 Gew.-% teilverseiftem Polyvinylalkohol wurden vorher mit 3 Gew.-Teilen Verflüssiger B abgemischt, und in der obigen Rezeptur getestet. Die Ergebnisse sind in Tabelle 2 zusammengefaßt.

### Beispiel 8:

23 Gew.-Teile eines Redispersionspulvers, hergestellt durch Verdüsung einer wässrigen Polymerdispersion auf Basis eines eines mit 8 Gew.-% teilverseiftem Polyvinylalkohol stabilisierten Vinylacetat/Ethylen/VeoVa10-Copolymeren mit einer Tg von 5°C, mit 5 Gew.-% teilverseiftem Polyvinylalkohol und 10 Gew.-% Verflüssiger A wurden in der obigen Rezeptur getestet. Die Ergebnisse sind in Tabelle 2 zusammengefaßt.

### Anwendungstechnische Prüfungen:

### Bestimmung des Ausbreitmaßes (Verlauf):

Die Bestimmung des Fließverhaltens erfolgte nach DIN EN 12706 nach einem Zeitraum von 1, 15 und 30 Minuten.

### Bestimmung der Biegezugfestigkeit (BZ):

Die Bestimmung der Biegezugfestigkeit erfolgte nach 1 Tag (1d) und 7 Tagen (7d) und wurde in Anlehnung an prEN 13851 an Prismen 40 x 40 x 160 mm³ vorgenommen.

### Bestimmung der Druckfestigkeit (DF):

Die Bestimmung der Druckfestigkeit erfolgte nach 1 Tag (1d) und 7 Tagen (7d) und wurde in Anlehnung an prEN 13851 an Normprismen 40 x 40 x 160 mm³ vorgenommen.

### Bestimmung der Blockfestigkeit (BF):

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
- 1 - 3 =: sehr gute Blockstabilität
- 4 - 6 =: gute Blockstabilität
- 7 - 8 =: befriedigende Blockstabilität
- 9 - 10 =: nicht blockstabil, Pulver nach Zerdrücken nicht mehr rieselfähig.

### Bestimmung des Absitzverhaltens RA:

Das Absitzverhalten der Redispersion dient als Maß für die Redispergierbarkeit der Pulvers. Die Redispersionen wurden 50 Gew.-%-ig in Wasser durch Einwirkung von starken Scherkräften erzeugt.
Das Absitzverhalten wurde dann an verdünnten Redispersionen (0.5 % Festgehalt) bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an.

Der Vergleich von Vergleichsbeispiel 1 mit Vergleichsbeispiel 2 zeigt, dass mit herkömmlichen Verflüssigern bei Coverdüsung nur Redispersionspulver mit reduzierter verflüssigender Wirkung erhalten werden.

Der Vergleich von Beispiel 3 mit Vergleichsbeispiel 6 beziehungsweise der Vergleich von Beispiel 4 mit Vergleichsbeispiel 7 zeigt, dass mit den erfindungsgemäß eingesetzten Verflüssigern bei Coverdüsung die verflüssigende Wirkung verbessert wird.

**Tabelle 2:**

| Beispiel | | Verlauf | Verlauf | Verlauf | BZ 1d/7d | DF 1d/7d | BF | RD |
|---|---|---|---|---|---|---|---|---|
| | | 1' [cm] | 15' [cm] | 30'[cm] | [N/mm²] | [N/mm²] | | 1h/24h |
| V.bsp. | 1 | 16.0 | 16.2 | 16.4 | 3.83/4.48 | 19.64/24.37 | 3 | 0.2/1 |
| V.bsp. | 2 | 10.6 | 9.8 | 8.5 | 3.11/4.06 | 14.72/22.34 | 10 | >7/-- |
| Bsp. | 3 | 16.3 | 16.2 | 16.1 | 3.79/5.55 | 19.12/24.52 | 4 | 0.1/1 |
| Bsp. | 4 | 15.4 | 15.5 | 16.0 | 3.80/5.53 | 18.35/26.12 | 3 | 0.1/0.8 |
| Bsp. | 5 | 16.8 | 16.3 | 16.5 | 4.01/5.78 | 18.56/25.48 | 4 | 0.1/0.9 |
| V.bsp. | 6 | 15.6 | 15.7 | 15.4 | 3.78/4.62 | 17.91/24.74 | 3 | 0.2/1 |
| V.bsp. | 7 | 15.3 | 15.5 | 15.2 | 3.78/4.63 | 20.7.2/28.01 | 3 | 0.2/1 |
| Bsp. | 8 | 16.9 | 16.7 | 16.7 | 3.80/5.52 | 17.16/23.07 | 4 | 0.2/1.2 |

## Patentansprüche

1. Polyvinylalkohol-stabilisierte Redispersionspulver mit verflüssigenden Eigenschaften erhältlich mittels Trocknung von mit Polyvinylalkoholen stabilisierten, wässrigen Dispersionen von Homo- oder Mischpolymerisaten aus einem oder mehreren Monomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, in Gegenwart eines Copolymerisats auf Basis von
a) 10 bis 50 Gew.-% ein oder mehrere Monomere aus der Gruppe umfassend ethylenisch ungesättigte Monocarbonsäuren, ethylenisch ungesättigte Dicarbonsäuren und deren Anhydride, mit jeweils 4 bis 8 C-Atome, sowie deren Salze,
b) 10 bis 50 Gew.-% ein oder mehrere ethylenisch ungesättigte Verbindungen mit Sulfonsäure-, Schwefelsäure- und PhosphonsäureGruppen sowie deren Salze,
c) 20 bis 80 Gew.-% ein oder mehrere Monomere aus der Gruppe umfassend Vinylester von unverzweigten oder verzweigten Alkylcarbonsäuren mit 1 bis 18 C-Atomen und Acrylsäureester sowie Methacrylsäureester von verzweigten oder unverzweigten Alkoholen mit 1 bis 15 C-Atomen, jeweils bezogen auf das Gesamtgewicht des Copolymerisats.

2. Polyvinylalkohol-stabilisierte Redispersionspulver mit verflüssigenden Eigenschaften gemäß Anspruch 1 auf der Basis von einem oder mehreren Polymerisaten aus der Gruppe umfassend Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester und/oder Methacrylsäureester, Mischpolymerisate von Vinylacetat mit Ethylen und Vinylchlorid, Styral-Acrylsäureester-Copolymerisate, Styrol-1,3-Butadien-Copolymerisate.

3. Polyvinylalkohol-stabilisierte Redispersionspulver mit verflüssigenden Eigenschaften nach Anspruch 1 oder 2, **dadurch gekennzeichnet, dass** als Polyvinylalkohole ein oder mehrere eingesetzt werden, aus der Gruppe umfassend teilverseifte oder vollverseifte Polyvinylalkohole mit einem Hydrolysegrad von 80 bis 100 Mol-%, sowie teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas, enthalten sind.

4. Polyvinylalkohol-stabilisierte Redispersionspulver mit verflüssigenden Eigenschaften nach Anspruch 3, **dadurch gekennzeichnet, dass** als Polyvinylalkohole ein oder mehrere eingesetzt werden, aus der Gruppe umfassend teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015).

5. Polyvinylalkohol-stabilisierte Redispersionspulver mit verflüssigenden Eigenschaften nach Anspruch 1 bis 4, **dadurch gekennzeichnet, dass** das verflüssigend wirkende Copolymerisat als Comonomer a) ein oder mehrere Monomere enthält aus der Gruppe umfassend Acrylsäure, Methacrylsäure, Crotonsäure, Itaconsäure, Fumarsäure, Maleinsäure, sowie die Salze der genannten Carbonsäuren.

6. Polyvinylalkohol-stabilisierte Redispersionspulver mit verflüssigenden Eigenschaften nach Anspruch 1 bis 5, **dadurch gekennzeichnet, dass** das verflüssigend wirkende Copolymerisat als Comonomer b) ein oder mehrere Monomere enthält aus der Gruppe umfassend Vinylsulfonsäure und deren Alkali- und Erdalkalimetallsalze, Styrolsulfonsäure und deren Alkali- und Erdalkalimetallsalze, Methallylsulfonsäure und deren Alkali- und Erdalkalimetallsalze, p-Methallyloxyphenylsulfonsäure und deren Alkali- und Erdalkalimetallsalze, und Sulfonsäuren der allgemeinen Formel CH₂=CR¹-CO-X-CR²R³-R⁴-SO₃H sowie deren Alkali- und Erdalkalimetallsalze, wobei X = O oder NH, und R¹, R², R³ gleich oder verschieden sind und die Bedeutung H und C₁- bis C₃-Alkyl haben, und R⁴ C₁- bis C₄-Alkylen ist

7. Polyvinylalkohol-stabilisierte Redispersionspulver mit verflüssigenden Eigenschaften nach Anspruch 1 bis 6, **dadurch gekennzeichnet, dass** das verflüssigend wirkende Copolymerisat als Comonomer c) ein oder mehrere Monomere enthält aus der Gruppe umfassend Vinylacetat, Vinylpropionat, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat.

8. Polyvinylalkohol-stabilisierte Redispersionspulver mit verflüssigenden Eigenschaften nach Anspruch 1 bis 7, **dadurch gekennzeichnet, dass** das Copolymerisat ein zahlenmittleres Molekulargewicht Mn von unter 50000 Dalton aufweist.

9. Polyvinylalkohol-stabilisierte Redispersionspulver mit verflüssigenden Eigenschaften nach Anspruch 1 bis B, **dadurch gekennzeichnet, dass** der Anteil des verflüssigend wirkenden Copolymerisats im Redispersionspulver 0.1 bis 25 Gew.-%, bezogen auf das Gesamtgewicht des Redispersionspulvers, beträgt.

10. Verfahren zur Herstellung des Polyvinylalkohol-stabilisierten Redispersionspulvers mit verflüssigenden Eigenschaften nach Anspruch 1 bis 9, mittels Trocknung von mit Polyvinylalkoholen stabilisierten, wässrigen Dispersionen von Homo- oder Mischpolymerisaten aus einem oder mehreren Monomeren aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, in Gegenwart eines Copolymerisats aus
a) einem oder mehreren Monomeren aus der Gruppe umfassend ethylenisch ungesättigte Monocarbonsäuren, ethylenisch ungesättigte Dicarbonsäuren und deren Anhydride, mit jeweils 4 bis 8 C-Atome, sowie deren Salze,
b) einer oder mehreren ethylenisch ungesättigten Verbindungen mit Sulfonat-, Sulfat- und Phosphonat-Gruppen,
c) einem oder mehreren Monomeren aus der Gruppe umfassend Vinylester von unverzweigten oder verzweigten Alkylcarbonsäuren mit 1 bis 18 C-Atomen und Acrylsäureester sowie Methacrylsäureester von verzweigten oder unverzweigten Alkoholen mit 1 bis 15 C-Atomen.

11. Verfahren gemäß Anspruch 10, **dadurch gekennzeichnet, dass** die Trocknung mittels Sprühtrocknung erfolgt, nach Zusatz von weiterem Polyvinylalkohol als Verdüsungshilfe.

12. Verwendung der Polyvinylalkohol-stabilisierten Redispersionspulver nach Anspruch 1 bis 9 in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), oder Gips, Kalk und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben.

13. Verwendung nach Anspruch 11 in selbstverlaufenden Bodenspachtelmassen und Fließestrichen.

## Claims

1. Polyvinyl-alcohol-stabilized redispersible powders having plasticizing properties, obtainable by drying a polyvinyl-alcohol-stabilized, aqueous dispersion of homopolymers or copolymers of one or more monomers from the group consisting of vinyl esters of branched and unbranched alkylcarboxylic acids having 1 to 18 carbon atoms, acrylic and methacrylic esters of branched and unbranched alcohols having 1 to 15 carbon atoms, dienes, olefins, vinylaromatics and vinylhalides, in the presence of a copolymer based on
a) from 10 to 50% by weight of one or more monomers from the group consisting of ethylenically unsaturated monocarboxylic acids, ethylenically unsaturated dicarboxylic acids and their anhydrides, having in each case 4 to 8 carbon atoms, and also salts thereof,
b) from 10 to 50% by weight of one or more ethylenically unsaturated compounds containing sulfonic, sulfuric, and phosphonic acid groups, and also salts thereof,
c) from 20 to 80% by weight of one or more monomers from the group consisting of vinyl esters of branched and unbranched alkylcarboxylic acids having 1 to 18 carbon atoms and acrylic and methacrylic esters of branched and unbranched alcohols having 1 to 15 carbon atoms, based in each case on the total weight of the copolymer.

2. Polyvinyl-alcohol-stabilized redispersible powders having plasticizing properties as claimed in Claim 1, based on one or more polymers from the group consisting of vinyl acetate homopolymers, copolymers of vinyl acetate with ethylene, copolymers of vinyl acetate with ethylene and one or more further vinyl esters, copolymers of vinyl acetate with ethylene and acrylate and/or methacrylate, copolymers of vinyl acetate with ethylene and vinyl chloride, styrene-acrylate copolymers, and styrene-1,3-butadiene copolymers.

3. Polyvinyl-alcohol-stabilized redispersible powders having plasticizing properties as claimed in Claim 1 or 2, wherein said polyvinyl alcohol comprises one or more from the group consisting of partially and fully hydrolyzed polyvinyl alcohols having a degree of hydrolysis of from 80 to 100 mol%, and also partially hydrolyzed, hydrophobically modified polyvinyl alcohols having a degree of hydrolysis of from 80 to 95 mol% and a Höppler viscosity in 4% strength aqueous solution of from 1 to 30 mPas.

4. Polyvinyl-alcohol-stabilized redispersible powders having plasticizing properties as claimed in Claim 3, wherein said polyvinyl alcohol comprises one or more from the group consisting of partially hydrolyzed polyvinyl alcohols having a degree of hydrolysis of from 80 to 95 mol% and a Höppler viscosity in 4% strength aqueous solution of from 1 to 30 mPas (Höppler method at 20°C, DIN 53015).

5. Polyvinyl-alcohol-stabilized redispersible powders having plasticizing properties as claimed in any of Claims 1 to 4, wherein the plasticizing copolymer comprises as comonomer a) one or more monomers from the group consisting of acrylic acid, methacrylic acid, crotonic acid, itaconic acid, fumaric acid, maleic acid, and the salts of said carboxylic acids.

6. Polyvinyl-alcohol-stabilized redispersible powders having plasticizing properties as claimed in any of Claims 1 to 5, wherein the plasticizing copolymer comprises as comonomer b) one or more monomers from the group consisting of vinylsulfonic acid and its alkali metal and alkaline earth metal salts, styrenesulfonic acid and its alkali metal and alkaline earth metal salts, methallylsulfonic acid and its alkali metal and alkaline earth metal salts, p-methallyloxyphenylsulfonic acid and its alkali metal and alkaline earth metal salts, and sulfonic acids of the general formula CH₂=CR¹-CO-X-CR²R³-R⁴-SO₃H and their alkali metal and alkaline earth metal salts, where X is O or NH, R¹, R², and R³ are identical or different and are defined as H and C₁ to C₃ alkyl, and R⁴ is C₁ to C₄ alkylene.

7. Polyvinyl-alcohol-stabilized redispersible powders having plasticizing properties as claimed in any of Claims 1 to 6, wherein the plasticizing copolymer comprises as comonomer c) one or more monomers from the group consisting of vinyl acetate, vinyl propionate, methyl acrylate, methyl methacrylate, ethyl acrylate, ethyl methacrylate, propyl acrylate, propyl methacrylate, n-butyl acrylate, n-butyl methacrylate, and 2-ethylhexyl acrylate.

8. Polyvinyl-alcohol-stabilized redispersible powders having plasticizing properties as claimed in any of Claims 1 to 7, wherein the copolymer has a number-average molecular weight Mn of less than 50 000 daltons.

9. Polyvinyl-alcohol-stabilized redispersible powder having plasticizing properties as claimed in any of Claims 1 to 8, wherein the fraction of the plasticizing copolymer in the redispersible powder is from 0.1 to 25% by weight, based on the total weight of the redispersible powder.

10. Process for preparing the polyvinyl-alcohol-stabilized redispersible powder having plasticizing properties as claimed in any of Claims 1 to 9, by drying a polyvinyl-alcohol-stabilized, aqueous dispersion of homopolymers or copolymers of one or more monomers from the group consisting of vinyl esters of branched and unbranched alkylcarboxylic acids having 1 to 18 carbon atoms, acrylic and methacrylic esters of branched and unbranched alcohols having 1 to 15 carbon atoms, dienes, olefins, vinylaromatics and vinylhalides, in the presence of a copolymer formed from
a) one or more monomers from the group consisting of ethylenically unsaturated monocarboxylic acids, ethylenically unsaturated dicarboxylic acids and their anhydrides, having in each case 4 to 8 carbon atoms, and also salts thereof,
b) one or more ethylenically unsaturated compounds containing sulfonate, sulfate, and phosphonate groups,
c) one or more monomers from the group consisting of vinyl esters of branched and unbranched alkylcarboxylic acids having 1 to 18 carbon atoms and acrylic and methacrylic esters of branched and unbranched alcohols having 1 to 15 carbon atoms.

11. Process as claimed in Claim 10, wherein drying is effected by means of spray drying following the addition of further polyvinyl alcohol as a spraying aid.

12. Use of the polyvinyl-alcohol-stabilized redispersible powder as claimed in any of Claims 1 to 9 in chemical products for the construction industry, alone or in conjunction with hydraulically setting binders such as cements (Portland, aluminate, pozzolanic, slag, magnesia, and phosphate cement) or gypsum, lime and waterglass, for the production of construction adhesives, especially tile adhesives and exterior insulation adhesives, plasters and renders, filling compounds, trowel-applied flooring compounds, leveling compounds, grouts, jointing mortars, and paints.

13. Use as claimed in Claim 11 in self-leveling floor-filling compounds and flowable screeds.

## Revendications

1. Poudres de redispersion stabilisées par un poly(alcool vinylique), ayant des propriétés fluidifiantes, pouvant être obtenues par séchage de dispersions aqueuses, stabilisées par des poly(alcools vinyliques), d'homo- ou de copolymères d'un ou plusieurs monomères du groupe comprenant les esters vinyliques d'acides alkylcarboxyliques à chaîne droite ou ramifiée ayant 1 à 18 atomes de carbone, les esters de l'acide acrylique ou les esters de l'acide méthacrylique d'alcools à chaîne droite ou ramifiée ayant 1 à 15 atomes de carbone, les diènes, les oléfines, les composés vinylaromatiques et les halogénures de vinyle, en présence d'un copolymère à base
a) de 10 à 50 % en poids d'un ou plusieurs monomères du groupe comprenant les acides monocarboxyliques à insaturation éthylénique, les acides dicarboxyliques à insaturation éthylénique et leurs anhydrides, ayant chacun 4 à 8 atomes de carbone, ainsi que leurs sels,
b) de 10 à 50 % en poids d'un ou plusieurs composés à insaturation éthylénique, comportant des groupes acide sulfonique, acide sulfurique et acide phosphonique, ainsi que leurs sels,
c) de 20 à 80 % en poids d'un ou plusieurs monomères du groupe comprenant les esters vinyliques d'acides alkylcarboxyliques à chaîne droite ou ramifiée ayant 1 à 18 atomes de carbone et les esters de l'acide acrylique, ainsi que les esters de l'acide méthacrylique, d'alcools à chaîne droite ou ramifiée ayant 1 à 15 atomes de carbone, dans tous les cas par rapport au poids total du copolymère.

2. Poudres de redispersion stabilisées par un poly(alcool vinylique) et ayant des propriétés fluidifiantes selon la revendication 1, à base d'un ou plusieurs polymères du groupe comprenant les homopolymères de l'acétate de vinyle, les copolymères de l'acétate de vinyle avec l'éthylène, les copolymères de l'acétate de vinyle avec l'éthylène et avec un ou plusieurs autres esters vinyliques, les copolymères de l'acétate de vinyle avec l'éthylène et des esters de l'acide acrylique et/ou des esters de l'acide méthacrylique, les copolymères de l'acétate de vinyle avec l'éthylène et le chlorure de vinyle, les copolymères styrène-ester de l'acide acrylique, les copolymères styrène-1,3-butadiène.

3. Poudres de redispersion stabilisées par un poly(alcool vinylique) et ayant des propriétés fluidifiantes selon la revendication 1 ou 2, **caractérisées en ce qu'**on utilise en tant que poly(alcools vinyliques) un ou plusieurs composés du groupe comprenant les poly(alcools vinyliques) partiellement ou entièrement saponifiés, ayant un degré d'hydrolyse de 80 à 100 % en moles, ainsi que les poly(alcools vinyliques) partiellement saponifiés à modification hydrophobe, ayant un degré d'hydrolyse de 80 à 95 % en moles et une viscosité Hôppler en solution aqueuse à 4 % de 1 à 30 mPa.s.

4. Poudres de redispersion stabilisées par un poly(alcool vinylique) et ayant des propriétés fluidifiantes selon la revendication 3, **caractérisées en ce qu'**on utilise en tant que poly(alcools vinyliques) un ou plusieurs composés du groupe comprenant les poly(alcools vinyliques) partiellement saponifiés, ayant un degré d'hydrolyse de 80 à 95 % en moles et une viscosité Hôppler en solution aqueuse à 4 % de 1 à 30 mPa.s (méthode selon Höppler à 20°C, DIN 53015).

5. Poudres de redispersion stabilisées par un poly(alcool vinylique) et ayant des propriétés fluidifiantes selon les revendications 1 à 4, **caractérisées en ce que** le copolymère à effet fluidifiant contient en tant que comonomère a) un ou plusieurs monomères du groupe comprenant l'acide acrylique, l'acide méthacrylique, l'acide crotonique, l'acide itaconique, l'acide fumarique, l'acide maléique, ainsi que les sels des acides carboxyliques mentionnés.

6. Poudres de redispersion stabilisées par un poly(alcool vinylique) et ayant des propriétés fluidifiantes selon les revendications 1 à 5, **caractérisées en ce que** le copolymère à effet fluidifiant contient en tant que comonomère b) un ou plusieurs monomères du groupe comprenant l'acide vinylsulfonique et ses sels de métaux alcalins et alcalino-terreux, l'acide styrènesulfonique et ses sels de métaux alcalins et alcalino-terreux, l'acide méthallylsulfonique et ses sels de métaux alcalins et alcalino-terreux, l'acide p-méthallyloxyphénylsulfonique et ses sels de métaux alcalins et alcalino-terreux, et les acides sulfoniques de formule générale CH₂=CR¹-CO-X-CR²R³-R⁴-SO₃H, ainsi que leurs sels de métaux alcalins et alcalino-terreux, où X est O ou NH, et R¹, R² et R³ sont identiques ou différents et représentent chacun H ou un radical alkyle en C₁ à C₃, et R⁴ est un radical alkylène en C₁ à C₄.

7. Poudres de redispersion stabilisées par un poly(alcool vinylique) et ayant des propriétés fluidifiantes selon les revendications 1 à 6, **caractérisées en ce que** le copolymère à effet fluidifiant contient en tant que comonomère c) un ou plusieurs monomères du groupe comprenant l'acétate de vinyle, le propionate de vinyle, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle.

8. Poudres de redispersion stabilisées par un poly(alcool vinylique) et ayant des propriétés fluidifiantes selon les revendications 1 à 7, **caractérisées en ce que** le copolymère présente une masse moléculaire moyenne en nombre Mn inférieure à 50 000 daltons.

9. Poudres de redispersion stabilisées par un poly(alcool vinylique) et ayant des propriétés fluidifiantes selon les revendications 1 à 8, **caractérisées en ce que** la proportion du copolymère à effet fluidifiant dans la poudre de redispersion est de 0,1 à 25 % en poids par rapport au poids total de la poudre de redispersion.

10. Procédé de fabrication de la poudre de redispersion stabilisée par un poly(alcool vinylique) et ayant des propriétés fluidifiantes selon les revendications 1 à 9, par séchage de dispersions aqueuses, stabilisées par des poly(alcools vinyliques) d'homo- ou de copolymères d'un ou plusieurs monomères du groupe comprenant les esters vinyliques d'acides alkylcarboxyliques à chaîne droite ou ramifiée et ayant 1 à 18 atomes de carbone, les esters de l'acide acrylique ou les esters de l'acide méthacrylique d'alcools à chaîne droite ou ramifiée ayant 1 à 15 atomes de carbone, les diènes, les oléfines, les composés vinylaromatiques et les halogénures de vinyle, en présence d'un copolymère
a) d'un ou plusieurs monomères du groupe comprenant les acides monocarboxyliques à insaturation éthylénique, les acides dicarboxyliques à insaturation éthylénique et leurs anhydrides, ayant chacun 4 à 8 atomes de carbone, ainsi que leurs sels,
b) d'un ou plusieurs composés à insaturation éthylénique comportant des groupes sulfonate, sulfate et phosphonate,
c) d'un ou plusieurs monomères du groupe comprenant les esters vinyliques d'acides alkylcarboxyliques à chaîne droite ou ramifiée ayant 1 à 18 atomes de carbone et les esters de l'acide acrylique, ainsi que les esters de l'acide méthacrylique, d'alcools à chaîne droite ou ramifiée ayant 1 à 15 atomes de carbone.

11. Procédé selon la revendication 10, **caractérisé en ce que** le séchage est réalisé par séchage par atomisation, après addition d'un poly(alcool vinylique) supplémentaire servant d'auxiliaire d'atomisation.

12. Utilisation des poudres de redispersion stabilisées par un poly(alcool vinylique) selon les revendications 1 à 9 dans des produits chimiques pour le bâtiment, éventuellement en liaison avec des liants à prise hydraulique, tels que les ciments (ciment Portland, alumineux, de trass, de laitier, de magnésie, de phosphate), ou le plâtre, la chaux et la solution silicatée, pour la fabrication de colles pour le bâtiment, en particulier les colles pour carrelages et les colles pour protection thermique complète, les enduits, les produits de rebouchage, les produits de rebouchage pour planchers, les agents d'étalement, les coulis d'étanchéité, les mortiers de jointoiement et les peintures.

13. Utilisation selon la revendication 11, pour mortiers de rebouchage de plancher et chapes fluides à étalement spontané.
